# EUROPEAN PATENT SPECIFICATION

(11) **EP 2 189 372 B1**
(45) Date of publication and mention of the grant of the patent: **13.06.2012**
(21) Application number: 08020290.6
(22) Date of filing: 21.11.2008
(51) Int. Cl.: B64D 11/00, B64D 25/06, B60R 22/48

(54) **Method and system for passenger seat belt verification**
Verfahren und System zur Überwachung von Fluggast-Sicherheitsgurten
Procédé et système de vérification des ceintures de sécurité pour passagers

(43) Date of publication of application: 26.05.2010
(73) Proprietor: Deutsche Telekom AG, 53113 Bonn (DE)
(72) Inventor: Krishnamurthy, Sudha, Dr., 10627 Berlin (DE)
(74) Representative: Blumbach - Zinngrebe

(56) References cited:
- EP-A- 0 279 608
- EP-A- 1 588 908
- WO-A-98/29283
- WO-A-2005/030523
- DE-A1-102004 025 319
- US-A1- 2004 066 287
- US-A1- 2005 061 568
- US-A1- 2008 068 220

## Description

### Field of the invention

The invention generally relates to restraint systems and in particular to a method and a system for seat belt verification, i.e. for verifying whether a seat belt is properly fastened.

### Background of the invention

Typical commercial aircraft systems provide a conventional lap seat belt mechanism to restrain the movement of passengers during the flight take-off and landing phases as well as during mid-air turbulence. In the current system, all passengers are prompted to fasten the seat belts during critical phases when the flight crew broadcasts the request over the microphone or by turning on the fasten seat belt sign at each individual seat. Such a procedure is a participatory method and does not alert the crew members to which of the passengers have not complied with the request or which of the seat belt restraints have been compromised. In the current system, in order to ascertain whether passengers have fastened their seat belts, the crew members have to walk down the aisle and visually inspect each passenger's seat belt. This method does not ensure compliance, because after the flight attendant has finished the inspection, a passenger may deliberately unfasten his seat belt, thereby endangering not only his safety, but also that of the other passengers, without the flight crew being aware of it.

From US 6 002 325 A a status alerting unit is known which can be attached to a seat belt latch assembly in order to provide an audio alert, when the seat belt is latched or unlatched. A proximity sensor, such as a flipper element, is deflected when the seat belt tongue is inserted into the buckle and generates "BUCKLED" and "UNBUCKLED" signals. In an aircraft typically a plurality of seats are provided. In such an environment status alerting units as described in US 6 002 325 A providing an audio alert are not suitable for informing the flight crew about the fastening states of the passenger's seat belts.

In US 2005/0061568 A1 a device for indicating the buckled and unbuckled status of a seatbelt is described, wherein the device comprises a wireless transmitter for transmitting a wireless signal corresponding to the buckled and unbuckled state of the seatbelt which is processed by a safety information system. Transmission of the seatbelt status may occur upon latching and or unlatching of the seatbelt, at a predetermined time, or upon a request signal. The status of a plurality of seatbelts may be indicated by respective symbols on a display.

From WO 98/29283 A1 a device for a safety belt having a locking tongue which is inserted into a belt lock is known, wherein the locking tongue is equipped with a preferably passive transponder which is activated by a signal emitted from a combined transmission and reception unit which is arranged in the belt lock. In a memory part of the transponder an identity code is stored which corresponds to the identity of a certain safety belt. The transmitting unit in the belt lock emits in predetermined intervals a signal and if the transponder in the locking tongue is sufficiently close, i.e. the locking tongue is locked in the belt lock, the transponder is activated and emits an answering signal which contains the stored identity code. The answering signal is detected by the receiving unit of the belt lock and information which corresponds to the identity code is fed to a control unit which is electrically connected to the transmission and reception unit in the belt lock, wherein the control unit is arranged to check whether the identity code corresponds to a certain expected code which in turn corresponds to the locking tongue in question being fastened in the correct belt lock. That way the control unit is able to determine whether a certain locking tongue is fastened in the wrong belt lock.

In EP 0 279 608 A2 an information transmitting system is described which is capable of two way communication, suitable for use in transmitting information signals between a central control unit and a plurality of terminal apparatus units, wherein each terminal apparatus unit may be located at a different passenger seat in an aircraft. The information signals may comprise information on whether the seat belt is fastened, wherein such information may be provided by a respective sensor for detecting conditions of the seat.

In US 2004/0066287 A1 an arrangement for providing a boosted signal from a signal-generating device, such as an RFID tag, is described, including an antenna and a circulator, wherein the circulator amplifies the signal from the antenna and from the signal-generating device such that a twice-amplified signal is directed to the antenna.

It is an object of the present invention to show a new and improved approach for the verification of proper fastening of seat belts, in particular in an aircraft.

### Summary of the Invention

The inventive solution of the object is achieved by each of the subject matter of the respective attached independent claims. Advantageous and/or preferred embodiments or refinements are the subject matter of the respective attached dependent claims.

The inventive method for passenger seat belt verification is directed to seat belt units having a closing device, which comprises a female portion and a male portion, wherein for fastening the seat belt the male portion is inserted into the female portion. Accordingly at least one such seat belt unit is provided. However, the inventive method most preferably is utilized in an airplane, where typically a plurality of seat belt units are provided. The male portion comprises a tag device with stored identification information and the female portion comprises a corresponding reader device. The identification information stored in the tag device is read by the reader device, wherein the reading process is automatically caused, when and only when the male portion is properly inserted into the female portion. From the reader device of each seat belt unit a status message, the content of which depends on the read identification information or on the omission of identification information being read, is transmitted to a central processing device, which determines the fastening state of each seat belt unit from the received status messages and provides information on the fastening state of each seat belt unit to an output device for verification. When the method is performed in an airplane, the output device preferably is a flight attendant display unit or console, wherein a console can also be used as an input device for entering commands by a flight attendant.

The female portion preferably is provided as a buckle having an insertion slit, wherein the male portion preferably is provided as a tongue plate insertable into said insertion slit. Preferably the reader device is arranged within the buckle and the tag device is attached to or embedded within the tongue plate, so that when the seat belt is fastened, i.e. when the tongue plate is inserted into the buckle, the tag device and the reader device are brought into contact.

In a preferred embodiment the identification information stored in the tag device is read upon contact with the reader device, wherein contact between the tag device and the reader device is only established, when the male portion is properly inserted into the female portion. For this purpose the tag device is provided as a contact card, in particular as a smart-card, wherein the reader device is a corresponding smart-card reader. The smart-card may be provided as a microprocessor card or as a memory card. A memory card which essentially only comprises a nonvolatile memory storage component advantageously has a simple design and can hence be provided at low cost. The reading process is caused automatically upon contact between the smart-card and the smart-card reader, wherein for instance electrical contact is established between corresponding electrical contacts of the smart-card and the reader. This embodiment is however not limited to smart-cards, but also encompasses any other kind of contact cards and corresponding reader devices, as for instance a card provided with a magnetic stripe, in which data can be stored, and a corresponding reader device with a magnetic reading head.

In an alternative example not forming part of the invention but added for illustration, the identification information stored in the tag device is read by means of near-field communication when the tag device and the reader device are brought into contact or into close proximity, wherein communication between the tag device and the reader device is only established, when the male portion is properly inserted into the female portion. Near-field communication (NFC) is a short-range wireless communication technology that uses magnetic field induction to enable communication between devices when they are in contact or in close proximity. NFC-based tag devices comprise for instance RFID tags or labels or proximity cards. Preferably RFID tags are used which utilize a low frequency such as for instance 125 kHz for communication, since such tags have an especially low communication range, which preferably is below 10 cm, in particular below 5 cm, in particular below 2 cm.

A short communication range is preferable in order to prevent interference with the aircraft's electronics and also to ascertain that communication is only established, when the seat belt is correctly fastened.

For the same purpose the female portion of the closing device with advantage comprises a housing, within which the reader device is arranged, wherein the housing is provided with an insertion slit for inserting the male portion of the closing device comprising the tag device. Such an arrangement prevents any communication between reader device and tag device when the male portion is not inserted into the female portion, in particular if a metal housing is used, as this attenuates wireless communication.

Typically the female portion is provided as a buckle and the male portion is provided as a tongue plate, wherein the tag device, for instance provided as a smart-card or, in the alternative example not forming part of the invention, an RFID tag or label, may for example be attached to the tongue plate externally or embedded within the tongue plate intrinsically. The tag device preferably is a passive device having no internal power supply.

The power for the reader device can for example be supplied by a power supply integrated in the female portion, like a battery, or by a central power supply, for instance an airplane power system, to which the reader device is connected.

Advantageously the tag device is provided with storage means, in which a first ID is stored, which represents the seat number of the seat to which the seat belt unit is attached. According to a preferred embodiment of the inventive method the reader device only reads the first ID stored in the tag device, when the male portion is properly inserted into the female portion, thereby bringing the tag device and the reader device into contact. The status message comprising the value of the first ID read by the reader device is then transmitted to the central processing device. When the male portion is not properly inserted into the female portion, the tag device is not in contact with the reader device and in this case, the value transmitted in the status message as first ID is preferably a NULL value.

The closing device of the seat belt unit preferably is provided with a mechanical latching mechanism which is engaged, when the male portion is properly inserted into the female portion, typically provided as a tongue plate portion and a buckle portion, respectively. In the alternative example, not forming part of the invention, where near-field communication is utilized, the communication range of the NFC devices preferably is below 10 cm, in particular below 5 cm, in particular below 2 cm, wherein the tag device and the reader device are arranged in the male and female portions in such a way that only when the mechanical latching mechanism is engaged, a communication is enabled.

In a most preferred embodiment the reader device is associated with a second ID, which also represents the seat number of the seat to which the seat belt unit is attached. The status message transmitted by the reader device to the central processing device comprises the first ID and the second ID, i.e. the information read by the reader device from the tag device and the ID associated with the reader. The central processing device compares the first and second IDs for determining the state of the seat belt unit, wherein matching first and second IDs indicate the seat belt unit as properly fastened. A NULL value of the first ID indicates an unlatched seat belt, whereas differing first and second IDs indicate that a male portion of a closing device has been mistakenly inserted into the female portion of a different seat belt unit. This may happen, since in an aircraft, due to design or structural necessities, the tongue plate and buckle portions of the seat belts may not always be arranged on the same side of the seat. The central processing device typically comprises a micro-processor adapted to execute an application program stored in the central processing device.

The first ID stored in the tag device and the second ID associated with the reader device represent the seat number of the seat to which the seat belt unit is attached. In a preferred embodiment for this purpose the tag device and the reader device are respectively provided with unique IDs, which are transmitted to the central processing device, where a lookup table is stored, in which for each of said unique IDs a corresponding seat number is stored. For determining the fastening state of the seat belt unit, the central processing device compares the seat numbers retrieved from the said lookup table for the received pair of unique IDs. The second ID may be stored permanently in the reader device, for instance as a unique device ID provided by the manufacturer, or it may be a unique ID assigned by means of a communication protocol utilized for the communication between the reader device and the central processing device.

In a preferred embodiment the status messages are transmitted periodically with a pre-defined time interval. Preferably the software running in the central processing device is adapted to detect, after determining the fastening state of a seat belt unit from a received status message, whether a change in the fastening state has occurred and only provides information on the fastening state to the output device, when a change has been detected. Thereby the amount of communication can be reduced. In an alternative embodiment the reader device in the female portion is adapted to detect a change in the fastening state of the seat belt unit, i.e. a change in the value of the first ID read from the tag device in the male portion, and transmits a status message to the central processing device only after detecting a change in the status. Thereby the amount of communication can be reduced even further.

In a preferred embodiment the reader device of each seat belt unit transmits the status messages to the central processing device via a wired link. A wired link has the advantage that no radio signals are produced which may interfere with an airplane's electronics. However, a wired link requires an increased installation effort. The installation of a wired link may be especially costly, when existing seat belt units in an airplane are to be upgraded for performing the inventive method, since the wired link would have to be integrated into the existing airplane cabling.

In an alternative embodiment the status messages are transmitted wirelessly from the reader devices to the central processing device. In an airplane the central processing device preferably is located at one end of the airplane in an area with restricted access for passengers. Due to the plurality of seat belt units in an airplane, wireless communication firstly faces the problem of interference between different seat belt units transmitting status messages at the same time. Furthermore, if the reader device of each seat belt unit directly transmits its status messages wirelessly to the central processing device, a high transmission power is needed.

In order to face the above stated problems, in a most preferred embodiment of the inventive method a plurality of seat belt units are provided, which are organized into groups, wherein each group comprises a master seat belt unit, and wherein to the reader device of each of said master seat belt units status messages are transmitted from the reader devices of each of the other seat belt units belonging to the same group as the respective master seat belt unit, and the reader device of each master seat belt unit aggregates its own status message with all status messages received from other reader devices and transmits an aggregated status message to the reader device of another master seat belt unit or to the central processing device.

Furthermore, preferably the master seat belt units are organized in groups, wherein in each group the master seat belt units are ordered with respect to their distance to the central processing device, and wherein in each group, the reader device of each master seat belt unit transmits its aggregated status message to the reader device of the master seat belt unit, which is closest and nearer to the central processing device, beginning with the master seat belt unit, which has the largest distance from the central processing device, and ending with the master belt unit, which has the least distance from the central processing device and the reader device of which transmits its aggregated status message directly to the central processing device.

That way wireless transmissions are performed only between the reader devices of neighboring seat belt units, resulting in a reduced need for transmission power and reduced interference.

An inventive passenger seat belt verification system comprises at least one seat belt unit, a central processing device, and a central display device, wherein each of said seat belt units has a closing device with a female portion and a male portion, wherein said male portion comprises a tag device having storage means with identification information stored therein, preferably provided as a passive tag device, and said female portion comprises a reader device adapted to read the identification information stored in said tag device, when the male portion is properly inserted into the female portion. Each of said reader devices is adapted to transmit status messages to the central processing device and the central processing device is adapted to determine from the received status messages the fastening state of each of said seat belt units and to provide it to said central display device. Optionally, the fastening state can also be provided to a passenger display device located in view from the respective seat.

In the tag device preferably a first ID is stored, which represents the seat number of the seat to which the seat belt unit is attached, and the reader device is adapted to read said first ID and to transmit it within a status message to the central processing device. Most preferably a second ID is stored in the reader device, which is associated with the seat number of the seat to which the seat belt unit is attached, and the reader device is adapted to transmit a status message, which comprises the first ID and the second ID, wherein the central processing device is adapted to compare the first and second IDs for determining the fastening state of the seat belt unit.

In a preferred embodiment the tag device is provided as a smart-card and said reader device is provided as a smart-card reader. In an alternative example not forming part of the invention the tag device is provided as an RFID tag or label and the reader device is provided as an RFID reader.

Preferably the reader device in the female portion is adapted to detect a change in the value of the first ID read from the tag device in the male portion and to transmit a status message in response to detecting a change. Additionally or alternatively the software running in the central processing device is adapted to detect a change in the fastening state of a seat belt based on the received status messages and accordingly the central processing device only transmits update information to the output device in response to detecting a change in the fastening state.

Further, the reader devices with advantage are provided with means for wirelessly transmitting the status messages to the central processing device. For the wireless transmission of messages to the central processing device the seat belt units preferably are organized into groups in order to perform the above described variant of the inventive method, leading to reduced interference and reduced transmission power. For this purpose the reader devices of the seat belt units are provided with individual information on the respective group membership of their seat belt units.

An inventive seat belt unit is adapted for use in a passenger seat belt verification system as described above and accordingly has a closing device with a female portion and a male portion, wherein said male portion comprises a tag device with stored identification information, and wherein said female portion comprises a corresponding reader device, wherein said reader device is adapted to read said identification information, when the male portion is properly inserted into the female portion, and wherein the reader device is adapted to transmit status messages to a central processing device.

Safety problems which currently exist in airplanes due to passengers deliberately unfastening their seat belts after the flight attendant has finished the inspection can be prevented by employing the inventive method for passenger seat belt verification. The invention provides an automated system by making use of a tag device and a corresponding reader device to verify, if the passengers in an aircraft are complying to the seat belt instructions and alerting the flight attendants to anomalies in a timely manner.

### Brief Description of the Figures

It is shown in
- Fig. 1: schematically a passenger seat belt unit,
- Fig. 2: schematically a male portion of a preferred embodiment of an inventive seat belt unit,
- Fig. 3: schematically the preferred embodiment of an inventive seat belt unit, the male portion of which is shown in Fig. 2, in an unfastened state,
- Fig. 4: schematically the seat belt unit of Fig. 3 in a fastened state,
- Fig. 5: schematically a male portion of an alternative example, not forming part of the invention, of a seat belt unit,
- Fig. 6: schematically the alternative example, not forming part of the invention, of a seat belt unit, the male portion of which is shown in Fig. 5, in a fastened state,
- Fig. 7: schematically a preferred embodiment and an alternative example, not forming part of the invention, of a seat belt verification system,
- Fig. 8: a flow chart showing the steps of a preferred embodiment of an inventive method for seat belt verification, and

- Fig. 9: schematically a preferred embodiment of an inventive seat belt verification system for use in an airplane.

### Detailed Description of the Invention

Subsequently, preferred but exemplar embodiments of the invention are described in more detail with regard to the figures.

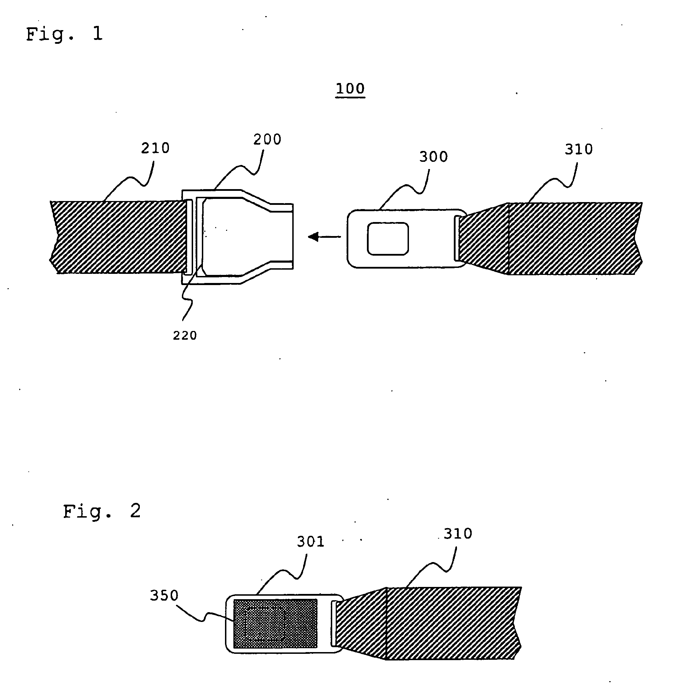

Fig. 1 schematically shows a passenger seat belt unit 100, having a design as it is typically used in current aircrafts, comprising a female connecting portion 200 and a male connecting portion 300. The male connecting portion 300 is provided as a tongue plate portion which is insertable into the female connecting portion 200, provided as a buckle portion. Attached to the female and male portions 200 and 300 are respective belt portions 210 and 310, which are connected to the respective seat. The female connecting portion 200 is further provided with a release lever 220 for unlatching the seat belt.

Each seat belt unit in the inventive seat belt verification system is a smart device. The inventive smart seat belt unit typically is one of a plurality of such units. The tongue plate portion 300 is modified to be a "smart" device by including a very thin passive tag device that is programmed with the corresponding seat number.

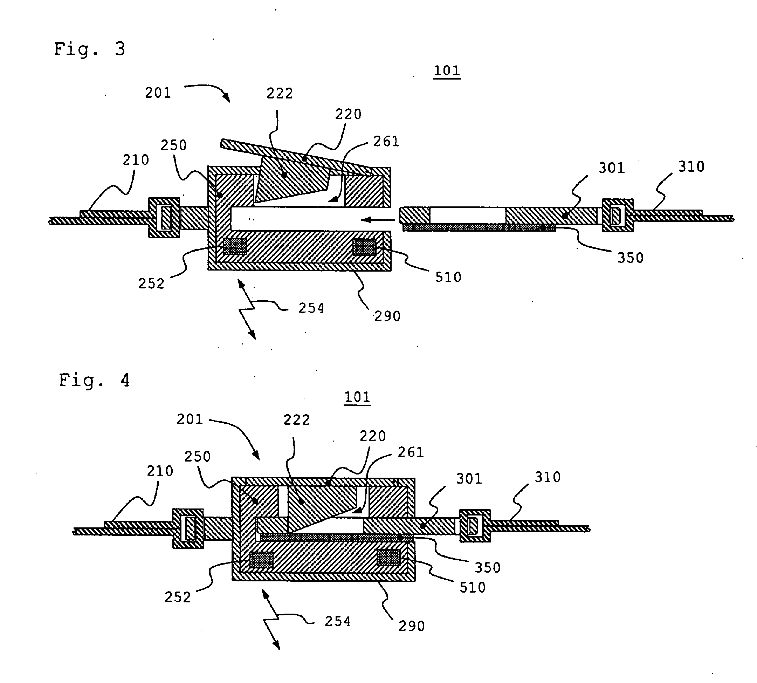

Fig. 2 shows a top view of the tongue plate 301 of a preferred embodiment of an inventive seat belt unit 101 shown in Figs. 3 and 4. In this embodiment the tongue plate 301 is provided with an externally attached slim smart-card 350. The smart-card 350 may also be embedded within the tongue plate 301, wherein in that case any needed direct contacts of the smart-card 350 are arranged in such a way as to be accessible from the outside.

Figures 3 and 4 show schematic side views of a cross-section of the seat belt unit 101 in an unfastened and in a fastened state respectively. The smart-card 350 is attached to the tongue plate 301 in such a way that when the tongue plate 301 is inserted into the female buckle portion 201, as shown in Fig. 3, the smart-card 350 will have a landing contact with the smart-card reader 250. In the shown embodiment the smart-card reader 250 is arranged within a housing 290 in such a way that the smart-card 350 is only read, when the tongue plate 301 is properly inserted into the buckle 201, resulting in the fastened state as shown in Fig. 4. For the latching mechanism to operate the smart-card reader 250 is provided with an opening 261 allowing free movement of the locking member 222. Furthermore, the arrangement is designed in such a way that the locking member 222 does not interfere with the smart-card 350 which is attached on one side of the tongue plate 301. Of course, in the shown embodiment the tongue plate 301 then needs to be inserted with an orientation, in which the smart-card 350 is located on that side of the tongue plate 301 which faces away from the locking member 222. For this purpose guiding means, not shown in the Figures, can be provided which allow the tongue plate 301 to be inserted only in the desired orientation. Of course, any other suitable arrangement also lies within the scope of the invention. So for instance the smart-card 350 could also be attached to the tongue plate 301 in such a way that it does not extend over the area of the tongue plate 301, where the hole is provided for engagement of the locking member 222. In such an arrangement the reader device 250 could preferably be adapted in such a way that the smart-card 350 can be read in either orientation of the tongue plate 301.

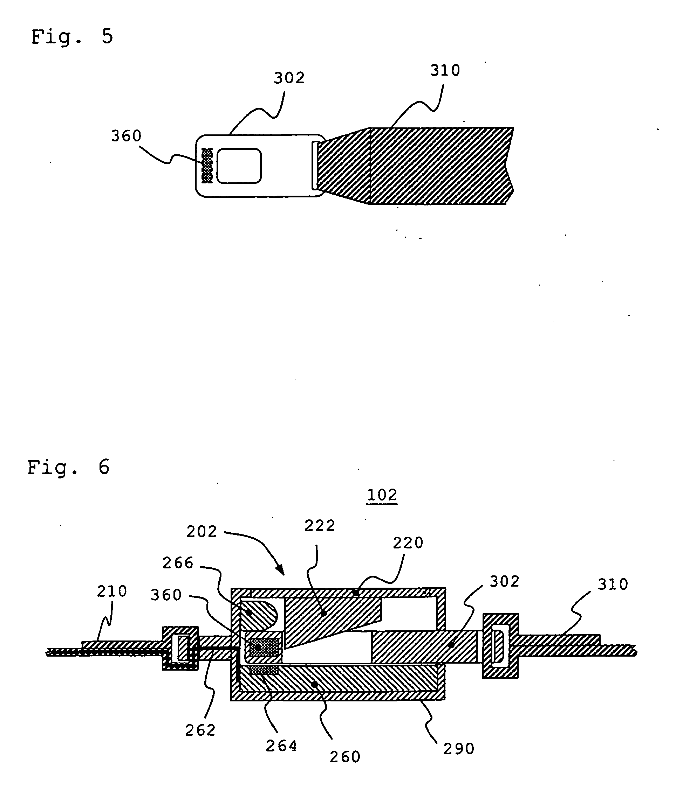

Fig. 5 shows a top view of the tongue plate 302 of an alternative example, not forming part of the invention, of a seat belt unit 102 shown in Fig. 6. In this example the tongue plate 302 is provided with an RFID tag 360 embedded in the tongue plate 302 intrinsically. Of course, the RFID tag 360 could also be attached externally to the tongue plate 302.

Fig. 6 shows a schematic side view of a cross-section of the seat belt unit 102 according to the example in a fastened state. The RFID label 360 is arranged in such a way in the tongue plate 302, so that only in the properly fastened state as shown in Fig. 6, the RFID tag 360 is in a position, where it is in contact or in a very close proximity to a transceiver 264 of the RFID reader 260. For forcing the tongue plate into the correct position in the fastened state a guiding member 266 is provided. The RFID tag 360 preferably is embedded centrally in the tongue plate 302, so that it can be read independent from the orientation in which the tongue plate 302 is inserted into the female buckle portion 202.

In the preferred embodiment and the example the tag devices 350 and 360 arranged in the respective tongue plate portions 301 and 302 are passive devices, in the following also simply referred to as tag.

Furthermore, in the preferred embodiment and the example, the respective buckle portion of each seat belt is modified to include a reader device, so that when the tongue plate containing the tag is inserted into the buckle portion, it is in contact with the reader device inside the buckle and the reader can read the contents of the tag. This reader device may be a smart card reader 250, as in the buckle portion 201 shown in Figs. 3 and 4, or in the example a low frequency RFID reader 260, as in the buckle portion 202 shown in Fig. 6, that can read the content of the tag only upon contact. Accordingly, the content of the tag can only be read, when the seat belt is properly fastened, i.e. when the locking member 222 attached to the release lever 220 of the buckle portion engages the corresponding slot in the tongue plate portion, as shown in Figures 4 and 6. The release lever 220 preferably is kept in the engaged position by means of a spring.

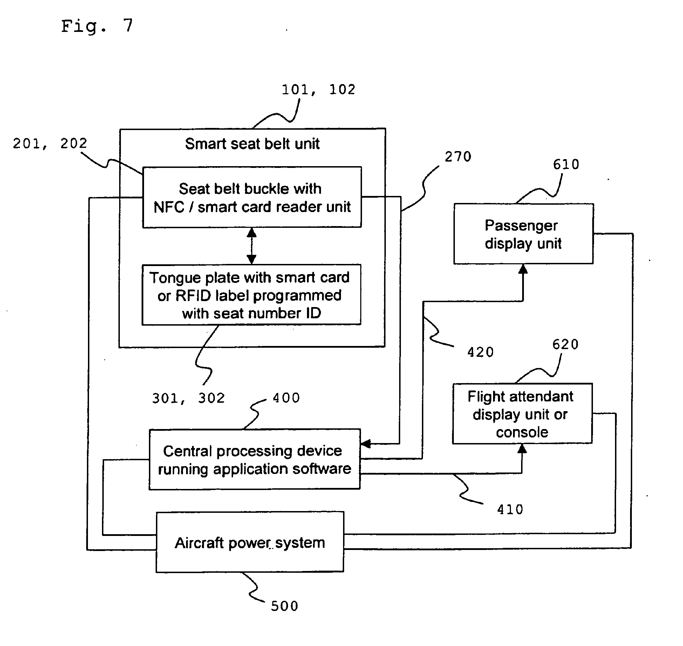

In the embodiment shown in Figures 3 and 4 the reader device 250 is powered through means that are not dependent on the aircraft's power system, such as battery 510. In the alternative example shown in Fig. 6 the reader device 260 receives power from the aircraft's regular or emergency power system 500, shown in Fig. 7, through line 262.

A preferred embodiment of an inventive seat belt verification system is shown in Fig. 7. Typically a plurality of smart seat belt units 101 or 102 are provided, although in Fig. 7 only one is exemplary shown. The seat belt unit 101 or 102 comprises a seat belt buckle 201 or 202 and a tongue plate 301 or 302, respectively, as described above. In the shown embodiment the reader devices are connected to the aircraft's power system 500. Further, provided is a central processing device 400 that runs the application software, a flight attendant's display unit 620 and a passenger display unit 610, which also receive their power from the aircraft's power system 500.

The reader at each seat belt periodically communicates the contents of the tag that it reads to the central processing device 400. This communication is enabled through the link 270, which may preferably be the wired link 262, shown in Fig. 6, that connects the reader device 260 with the central processing device 400 or a wireless link 254, as shown in Figs. 3 and 4, that is not disruptive to the operation of the aircraft. For establishing the wireless link 254 a transceiver 252 is provided. In the shown embodiment the transceiver 252 is integrated in the smart-card reader 250, however also components external to the reader device 250 could be utilized for wireless data transmission. It is noted that the wired link 262 may comprise several different cables, such as a power cable connected to the aircraft's power system 500 and a data cable connected to the central processing device 400.

Based on the technology options described above, if a reader 250 or 260 detects a tag 350 or 360 and reads the ID stored in the tag, then that seat belt is fastened. If a reader does not detect a tag, then that seat belt is unlatched and may either indicate a vacant seat or a seat belt that is not fastened or is improperly fastened.

Based on the information received from each reader, the software running in the central processing device 400 communicates with the flight attendant display unit or console 620 through link 410 to periodically refresh the current status of the seat belts in the aircraft. This status indicates whether a seat belt is fastened or not. There are different ways to present this status information. One option is to use a graphical view of the seating map of the aircraft and highlight the seats where the belt is not fastened. Another option is to just list the seat numbers of the seats where the seat belts are not fastened. If a seat belt is not fastened, the processor 400 can also optionally communicate with the corresponding passenger display unit or console 610 through link 420 to display a message reminding the passenger to fasten the seat belt. The consoles 610 and 620 are powered by the aircraft power system 500. Console 610 is one of a plurality of such units, typically comprising a corresponding console 610 for each seat belt unit 101 or 102.

During the times that passengers are mandatorily required to fasten their seat belts, the flight attendants can use the information on their console 620 to follow up with the non-complying passengers, thereby avoiding the need to visually inspect each seat.

The above system may also be used to ensure that only the associated male tongue and female buckle portions can be properly latched by programming each reader with an ID that is the same as the seat number. Since the tags are also programmed with the corresponding seat number, the software verifies that the reader ID and the corresponding tag ID that it reads are identical. If that is not the case, the seat belt is marked as unlatched or as incorrectly fastened on the console 620 and optionally, on the passenger console 610.

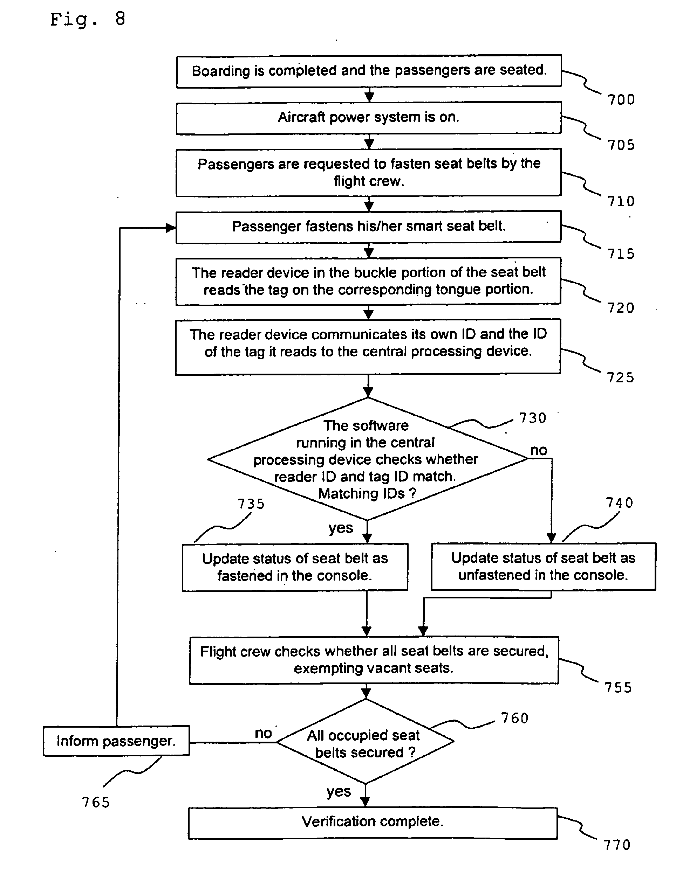

The flow chart in Fig. 8 shows the steps of a preferred embodiment of an inventive method for seat belt verification and thus the functioning of the above described system.

In step 700 the boarding is completed and the passengers are seated. The aircraft power system is turned on in step 705. For take-off, for landing or during turbulences the passengers are requested by the flight crew to fasten their seat belts in step 710. In step 715 a passenger fastens his or her seat belt. In step 720 the reader device in the buckle portion of the respective seat belt reads the tag on the corresponding tongue portion and communicates in step 725 its own ID and the ID of the tag it reads to the central processing device 400. In step 730 the software running in the central processing device 400 checks, whether the reader ID and tag ID match. If they do, in step 735 the status of the respective seat belt is updated in the console 620 as fastened, otherwise it is updated as unfastened in step 740. The steps 715 to 740 are repeatedly performed for each passenger who fastens or unfastens his or her seat belt, wherein on power-up preferably each seat belt is updated at least once. In step 755 the flight crew checks, whether all seat belts are secured, exempting vacant seats. If all occupied seat belts are secured in step 760, then the verification is complete (step 770). If the flight crew detects in step 760 that not all seat belts are secured, the passengers who have not yet fastened their seat belt or fastened it improperly are informed by the flight crew in step 765. When also these passengers have fastened their smart seat belts in step 715 it is again proceeded with step 720.

In a preferred embodiment the reader device in each seat belt unit 101 or 102 periodically communicates with the software running in the central processing device 400. This information contains the ID of the reader and the ID of the tag, if the tag is currently in contact with the reader. Note that at most one tag can be in contact with a reader at any time. The IDs of the reader and the tag denote the seat number they are associated with. The software compares the reader ID and the tag ID to determine the status of the seat belt. Based on the information from the reader, the following possible scenarios arise:
1. If the reader does not detect any tag, then the tag ID field in the message sent to the software has a NULL value. This indicates that the seat belt of that seat is not fastened. This may be because either the seat is vacant or the passenger has not fastened his or her seat belt.
2. When a passenger fastens his or her seat belt by inserting the tongue plate containing the tag into the buckle portion, the reader device in the buckle is in contact with the tag and reads the ID of the tag. The reader then communicates its own ID and the tag ID to the software running on the processor.
2.1. If the reader ID and the corresponding tag ID are the same, then the software records that the seat belt of that seat is fastened.
2.2. If the IDs do not match, then the seat belt is improperly fastened and the software records that the seat belt is unfastened.

Based on the above inference, the software then refreshes the status of the seat belts in the flight attendant console 620. Optionally, if a seat belt is unfastened, the software can also communicate with the corresponding passenger console 610 and send an alert. When there is a mandatory instruction to fasten the seat belt, e.g. during take-off, landing or turbulence, the flight attendants can check the flight attendant console 620 to determine which of the seat belts are unfastened and walk down the aisle to notify only those passengers. The vacant seats are exempted. When all the seat belts are secured, the take-off and landing procedures may proceed.

Some improvements can be made in the above procedure. Instead of sending information from each reader to the central processing device 400 periodically, the amount of communication can be further reduced by sending information only, when the reader detects a change. For example, if a reader has not detected any tag over a period of time, then it can avoid sending the same null information repeatedly to the central processing device 400. In the absence of any updates, the software can assume that there is no change in the previous information reported by the reader. However, at some later time, if the reader comes in contact with a tag, then it can communicate the contents of the tag to the processor. Similarly, if the reader is continuously reading the same tag, then it can avoid sending repetitive updates. When at some point the reader does not detect any tag, then it can communicate that change to the software, which in turn will update the status on the consoles 620 and optionally, on the passenger console 610.

The communication between each reader device and the central processing device 400 may use a wired link or wireless communication. In the case of the wired link, each reader device communicates the data directly through its respective wired connection. However, if wireless communication is used, the wireless transmission protocols are typically of a broadcast nature. So when readers in the same neighborhood transmit information at the same time, it could result in collision and consequent loss of information. To avoid this, the system preferably is improved by devising a protocol to reduce collisions.

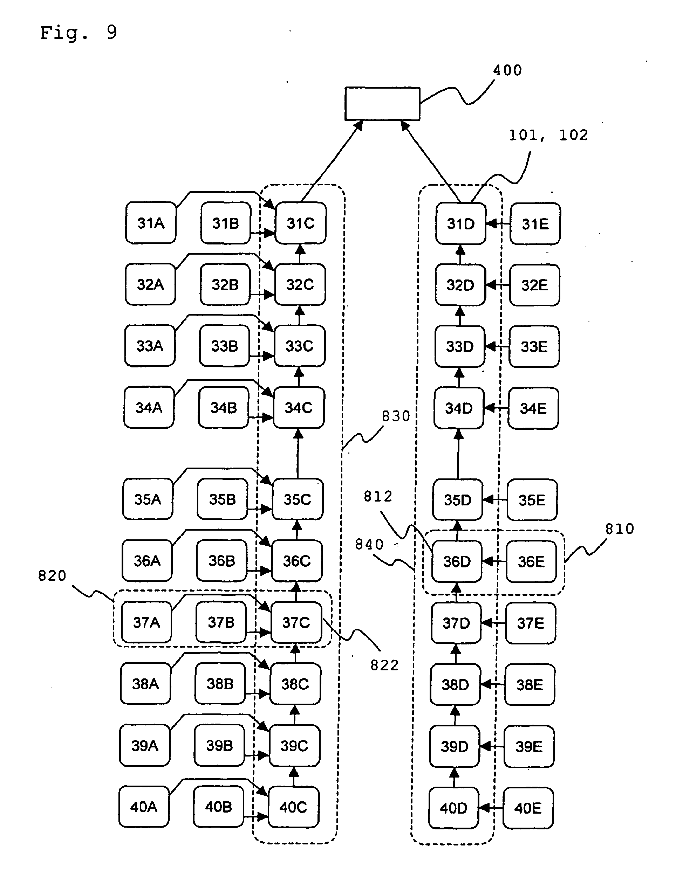

A preferred method is described in the following with reference to Fig. 9. The seating arrangement in an aircraft can be regarded as a grid topology. In each row, the reader device can send the information they collect to the aisle seat in that row. For e.g., if 37A, 37B, and 37C are the window, middle, and aisle seats on the left side of row 37, then the reader devices corresponding to the seats 37A and 37B send their information to the reader device of seat 37C. The seat belt units of the seats 37A, 37B, and 37C thus form a group 820. The seat belt unit of seat 37C is a master unit 822 within group 820, the reader of which aggregates its own information with the information it receives from the other reader devices and sends that information forward to the reader device of the aisle seat 36C in front of it. A similar group 810 is shown on the right side, comprising the seat belt units of seats 36D and 36E, wherein again the seat belt unit of the aisle seat 36D is a master 812. Groups 810 and 820 are shown for exemplary purposes. In the shown embodiment, each row comprises a group of three seat belt units on the left side and a group of two seat belt units on the right side. On the right side the aggregated information is also forwarded row by row via the reader devices of the master seat belt units. The master seat belt units thus themselves form groups 830 and 840, wherein in each of these groups the master seat belt units are ordered with respect to their distance to the central processing device 400.

Thus, by repeatedly aggregating information in each row and forwarding that aggregated information to the next row in the direction of the central processing device 400, where the software is running, the amount of traffic resulting from the individual readers and thereby the likelihood of collisions is reduced, if link 270 shown in Fig. 7 uses wireless communication.

The invention provides the following exemplary advantages:

With great advantage the inventive passenger verification system based on a combination of a tag device and a reader device is an automatic mechanism to detect whether a passenger seat belt in an aircraft system is fastened or not. In the current manual inspection system, a passenger seat belt may be unfastened either deliberately or inadvertently by the passenger after the flight attendant has finished the visual inspection and the flight attendants are not alerted to such events. The invention addresses this problem and proposes a method that can generate an alert in a timely manner to the flight crew and the corresponding passenger, who can then take appropriate actions. Hence, the inventive method improves the passenger safety in an aircraft system.

Furthermore, the invention proposes a method that is less tedious than that used by the current system, because it avoids the need for flight attendants to walk down the aisle to inspect the seat belts individually. The method proposed by the invention is also more reliable than the procedure used by the current systems, because visual inspections do not always accurately determine if the seat belts are correctly fastened.

Although the described embodiments of the invention are primarily targeted at passenger seat belts in aircrafts, the invention can also with advantage be used in any other restraint system having seat belts, for instance it can be used in an automobile or any other vehicle to detect, if seat belts are fastened.

## Claims

1. A method for passenger seat belt verification, comprising the steps of
- providing at least one seat belt unit (101, 102) having a closing device with a female portion (201, 202) and a male portion (301, 302), wherein said male portion (301, 302) comprises a tag device (350, 360) with stored identification information, and wherein said female portion (201, 202) comprises a corresponding reader device (250, 260),
- reading the identification information stored in the tag device (350, 360) by said reader device (250, 260), wherein said identification information is only read, when the male portion (301, 302) is properly inserted into the female portion (201, 202),
- transmitting a status message from the reader device (250, 260) to a central processing device (400),
- determining the fastening state of each seat belt unit (101, 102) from the received status messages by said central processing device (400), and
- providing the fastening state of each seat belt unit (101, 102) to an output device (610, 620) for verification, **characterized in that**
the tag device is a contact card and the identification information stored in the tag device (350, 360) is read upon contact with the reader device (250, 260), wherein contract between the tag device (350, 360) and the reader device (250, 260) is only established, when the male portion (301, 302) is properly inserted into the female portion (201, 202).

2. The method of claim 1, wherein the identification information stored in the tag device (350, 360) comprises a first ID, which represents the seat number of the seat to which the seat belt unit (101, 102) is attached, and wherein said status message comprises said first ID.

3. The method of claim 2, wherein in the reader device (250, 260) a second ID is stored, which represents the seat number of the seat to which the seat belt unit (101, 102) is attached, the status message comprises the first ID and the second ID, and the central processing device (400) compares the first and second IDs for determining the fastening state of the seat belt unit (101, 102).

4. The method of any one of claim 1 to 3, wherein the status messages are transmitted periodically with a pre-defined time interval.

5. The method of claim 4, wherein the software running in the central processing device (400) is adapted to detect a change in the fastening state of the seat belt unit (101, 102), and wherein the central processing device (400) provides the fastening state to the output device (610, 620) only after detecting a change.

6. The method of any one of claim 1 to 3, wherein the reader device (250, 260) is adapted to detect a change in the fastening state of the seat belt unit (101, 102), and wherein a status message is transmitted only after detecting a change.

7. The method of any one of claims 1 to 6, wherein a plurality of seat belt units (101, 102) are provided, which are organized into groups (810, 820), wherein each group comprises a master seat belt unit (812, 822), and wherein
- the status messages are transmitted wirelessly,
- to the reader device of each of said master seat belt units (812, 822) status messages are transmitted from the reader devices of each of the other seat belt units belonging to the same group (810, 820) as the respective master seat belt unit (812, 822), and
- the reader device of each master seat belt unit aggregates its own status message with all status messages received from other reader devices and transmits an aggregated status message to the reader device of another master seat belt unit or to the central processing device (400).

8. The method of claim 7, wherein the master seat belt units are organized in groups (830, 840), wherein in each group (830, 840) the master seat belt units are ordered with respect to their distance to the central processing device (400), and wherein in each group (830, 840) the reader device of each master seat belt unit transmits its aggregated status message to the reader device of the master seat belt unit, which is closest and nearer to the central processing device, beginning with the master seat belt unit, which has the largest distance from the central processing device (400), and ending with the master belt unit, which has the smallest distance from the central processing device (400) and the reader device of which transmits its aggregated status message directly to the central processing device (400).

9. A passenger seat belt verification system, comprising
- at least one seat belt unit (101, 102),
- a central processing device (400), and
- a central display device (620), wherein
- each of said seat belt units (101, 102) has a closing device with a female buckle portion (201, 202) and a male tongue portion (301, 302),
- said male portion (301, 302) comprises a tag device (350, 360) having storage means with identification information stored therein, wherein said tag device (350, 360) in particular is provided as a passive device,
- said female portion (201, 202) comprises a reader device (250, 260) adapted to read the identification information stored in said tag device (350, 360), when the male portion (301, 302) is properly inserted into the female portion (201, 202),
- each of said reader devices (250, 260) is adapted to transmit status messages to the central processing device (400),
- the central processing device (400) is adapted to determine from the received status messages the fastening state of each of said seat belt units (101, 102) and to provide said fastening state to said central display device (620) and/or to a passenger display device (610) located in view of the respective seat, **characterized in that** the tag device is a contact card, and
the reader device is adapted to read the identification information stored in the tag device (350, 360) upon contact of the tag device with the reader device (250, 260), wherein contact between the tag device (350, 360) and the reader device (250, 260) is only established, when the male portion (301, 302) is properly inserted into the female portion (201, 202).

10. The system of claim 9, wherein in said tag device (350, 360) a first ID is stored, which represents the seat number of the seat to which the seat belt unit (101, 102) is attached, and the reader device is adapted to read said first ID and to transmit it within a status message to the central processing device (400).

11. The system of claim 10, wherein
- in said reader device (250, 260) a second ID is stored, which represents the seat number of the seat to which the seat belt unit (100) is attached,
- the reader device (250, 260) is adapted to transmit a status message, which comprises the first ID and the second ID, and
- the central processing device (400) is adapted to compare the first and second IDs for determining the fastening state of the seat belt unit (101, 102).

12. The system of any one of claims 9 to 11, wherein said tag device is provided as a smart-card device (350) and said reader device is provided as a smart-card reader (250).

13. A seat belt unit (101, 102) for use in a passenger seat belt verification system according to any one of claims 11 to 15, having a closing device with a female portion (201, 202) and a male portion (301, 302), wherein said male portion (301, 302) comprises a tag device (350, 360) with stored identification information, and wherein said female portion (201, 202) comprises a corresponding reader device (250, 260), wherein said reader device (250, 260) is adapted to read said identification information, when the male portion (301, 302) is properly inserted into the female portion (201, 202), and to transmit status messages to a central processing device (400),
**characterized in that**
the tag device is a contact card, and
the reader device is adapted to read the identification information stored in the tag device (350, 360) upon contact of the tag device with the reader device (250, 260), wherein contact between the tag device (350, 360) and the reader device (250, 260) is only established, when the male portion (301, 302) is properly inserted into the female portion (201, 202).

## Patentansprüche

1. Verfahren zur Überprüfung von Passagier-Sicherheitsgurten, welches folgende Schritte umfasst:
- Bereitstellen mindestens einer Sicherheitsgurt-Einheit (101, 102), die eine Verschlusseinrichtung mit einem Buchsenteil (201, 202) und einem Steckerteil (301, 302) aufweist, wobei das Steckerteil (301, 302) ein Kennungselement (350, 360) mit gespeicherter Identifikationsinformation umfasst und wobei das Buchsenteil (201, 202) eine entsprechende Leseeinrichtung (250, 260) umfasst,
- Lesen der in dem Kennungselement (350, 360) gespeicherten Identifikationsinformation durch die Leseeinrichtung (250, 260), wobei die Identifikationsinformation nur gelesen wird, wenn das Steckerteil (301, 302) ordnungsgemäß in das Buchsenteil (201, 202) eingefügt ist,
- Übermitteln einer Status-Meldung von der Leseeinrichtung (250, 260) an eine zentrale Verarbeitungseinrichtung (400),
- Feststellen des Befestigungszustandes jeder Sicherheitsgurt-Einheit (101, 102) anhand der empfangenen Status-Meldungen durch die zentrale Verarbeitungseinrichtung (400), und
- Bereitstellen des Befestigungszustandes jeder Sicherheitsgurt-Einheit (101, 102) für eine Ausgabeeinrichtung (610, 620) zur Überprüfung, **dadurch gekennzeichnet, dass** das Kennungselement eine Kontaktkarte ist und die in dem Kennungselement (350, 360) gespeicherte Identifikationsinformation bei Kontaktierung mit der Leseeinrichtung (250, 260) gelesen wird, wobei der Kontakt zwischen dem Kennungselement (350, 360) und der Leseeinrichtung (250, 260) nur hergestellt wird, wenn das Steckerteil (301, 302) ordnungsgemäß in das Buchsenteil (201, 202) eingefügt wird.

2. Verfahren nach Anspruch 1, wobei die in dem Kennungselement (350, 360) gespeicherte Identifikationsinformation eine erste ID umfasst, welche die Sitznummer des Sitzes repräsentiert, an dem die Sicherheitsgurt-Einheit (101, 102) angebracht ist, und wobei die Status-Meldung die erste ID umfasst.

3. Verfahren nach Anspruch 2, wobei in der Leseeinrichtung (250, 260) eine zweite ID gespeichert ist, welche die Sitznummer des Sitzes repräsentiert, an dem die Sicherheitsgurt-Einheit (101, 102) angebracht ist, wobei die Status-Meldung die erste ID und die zweite ID umfasst, und wobei die zentrale Verarbeitungseinrichtung (400) die erste und die zweite ID vergleicht, um den Befestigungszustand der Sicherheitsgurt-Einheit (101, 102) festzustellen.

4. Verfahren nach einem der Ansprüche 1 bis 3, wobei die Status-Meldungen periodisch in einem vorgegebenen Zeitintervall übermittelt werden.

5. Verfahren nach Anspruch 4, wobei die Software, die in der zentralen Verarbeitungseinrichtung (400) läuft, dafür ausgelegt ist, eine Änderung des Befestigungszustandes der Sicherheitsgurt-Einheit (101, 102) zu erkennen, und wobei die zentrale Verarbeitungseinrichtung (400) der Ausgabeeinrichtung (610, 620) den Befestigungszustand nur nach Erkennen einer Änderung zur Verfügung stellt.

6. Verfahren nach einem der Ansprüche 1 bis 3, wobei die Leseeinrichtung (250, 260) dafür ausgelegt ist, eine Änderung des Befestigungszustandes der Sicherheitsgurt-Einheit (101, 102) zu erkennen, und wobei eine Status-Meldung nur nach Erkennen einer Änderung übermittelt wird.

7. Verfahren nach einem der Ansprüche 1 bis 6, wobei eine Mehrzahl von Sicherheitsgurten (101, 102) vorgesehen ist, die in Gruppen organisiert sind (810, 820), wobei jede Gruppe eine Master-Sicherheitsgurt-Einheit (812, 822) umfasst, und wobei
- die Status-Meldungen drahtlos übermittelt werden, wobei
- an die Leseeinrichtung jeder der Master-Sicherheitsgurt-Einheiten (812, 822) Status-Meldungen von den Leseeinrichtungen jeder anderen Sicherheitsgurt-Einheit, die zu der gleichen Gruppe (810, 820) wie die jeweilige Master-Sicherheitsgurt-Einheit (812, 822) gehört, übermittelt werden, und wobei
- die Leseeinrichtung jeder Master-Sicherheitsgurt-Einheit ihre eigene Status-Meldung zusammen mit allen von anderen Leseeinrichtungen empfangenen Status-Meldungen sammelt und eine Sammelstatus-Meldung an die Leseeinrichtung einer anderen Master-Sicherheitsgurt-Einheit oder an die zentrale Verarbeitungseinrichtung (400) übermittelt.

8. Verfahren nach Anspruch 7, wobei die Master-Sicherheitsgurt-Einheiten in Gruppen (830, 840) organisiert sind, wobei in jeder Gruppe (830, 840) die Master-Sicherheitsgurt-Einheiten bezüglich ihrer Entfernung von der zentralen Verarbeitungseinrichtung (400) geordnet sind, und wobei in jeder Gruppe (830, 840) die Leseeinrichtung jeder Master-Sicherheitsgurt-Einheit ihre Sammelstatus-Meldung an die Leseeinrichtung der nächstgelegenen und näher der zentralen Verarbeitungseinrichtung befindlichen Master-Sicherheitsgurt-Einheit überträgt, beginnend mit der Master-Sicherheitsgurt-Einheit, die den größten Abstand von der zentralen Verarbeitungseinrichtung (400) aufweist, und endend mit der Master-Sicherheitsgurt-Einheit, die den geringsten Abstand von der zentralen Verarbeitungseinrichtung (400) aufweist, und wobei deren Leseeinrichtung die Sammelstatus-Meldung direkt an die zentrale Verarbeitungseinrichtung (400) übermittelt.

9. Passagier-Sicherheitsgurt-Überprüfungssystem, umfassend:
- mindestens eine Sicherheitsgurt-Einheit (101, 102),
- eine zentrale Verarbeitungseinrichtung (400), und
- eine zentrale Anzeigeeinrichtung (620), wobei
- jede der Sicherheitsgurt-Einheiten (101, 102) eine Verschlusseinrichtung mit einem Schnallen-Buchsenteil (201, 202) und einem Zungen-Steckerteil (301, 302) aufweist,
- wobei das Steckerteil (301, 302) ein Kennungselement (350, 360) mit Speichermitteln mit darin gespeicherter Identifikationsinformation umfasst, wobei das Kennungselement (350, 360) insbesondere als passives Bauelement vorgesehen ist,
- wobei das Buchsenteil (201, 202) eine Leseeinrichtung (250, 260) umfasst, die dafür ausgelegt ist, die in dem Kennungselement (350, 360) gespeicherte Identifikationsinformation auszulesen, wenn das Steckerteil (301, 302) ordnungsgemäß in das Buchsenteil (201, 202) eingefügt ist,
- wobei jede der Leseeinrichtungen (250, 260) dafür ausgelegt ist, Status-Meldungen an die zentrale Verarbeitungseinrichtung (400) zu übermitteln,
- wobei die zentrale Verarbeitungseinrichtung (400) dafür ausgelegt ist, anhand der empfangenen Status-Meldungen den Befestigungszustand jeder der Sicherheitsgurt-Einheiten (101, 102) zu bestimmen und den Befestigungszustand für die zentrale Anzeigeeinrichtung (620) und/oder eine im Sichtfeld des jeweiligen Sitzes angeordnete Passagier-Anzeigeeinrichtung (610) bereitzustellen,
**dadurch gekennzeichnet, dass** das Kennungselement eine Kontaktkarte darstellt und dass die Leseeinrichtung dafür ausgelegt ist, die in dem Kennungselement (350, 360) gespeicherte Identifikationsinformation bei Kontaktierung des Kennungselementes mit der Leseeinrichtung (250, 260) auszulesen, wobei ein Kontakt zwischen dem Kennungselement (350, 360) und der Leseeinrichtung (250, 260) nur hergestellt wird, wenn das Steckerteil (301, 302) ordnungsgemäß in das Buchsenteil (201, 202) eingefügt ist.

10. System nach Anspruch 9, wobei in dem Kennungselement (350, 360) eine erste ID gespeichert ist, welche die Sitznummer des Sitzes repräsentiert, an dem die Sicherheitsgurt-Einheit (101, 102) befestigt ist, und wobei die Leseeinrichtung dafür ausgelegt ist, die erste ID auszulesen und sie in einer Status-Meldung an die zentrale Verarbeitungseinrichtung (400) zu übermitteln.

11. System nach Anspruch 10, wobei
- in der Leseeinrichtung (250, 260) eine zweite ID gespeichert ist, welche die Sitznummer des Sitzes repräsentiert, an dem die Sicherheitsgurt-Einheit (100) befestigt ist,
- wobei die Leseeinrichtung (250, 260) dafür ausgelegt ist, eine Status-Meldung zu übermitteln, welche die erste ID und die zweite ID umfasst, und
- wobei die zentrale Verarbeitungseinrichtung (400) dafür ausgelegt ist, die erste und die zweite ID zu vergleichen, um den Befestigungszustand der Sicherheitsgurt-Einheit (101, 102) festzustellen.

12. System nach einem der Ansprüche 9 bis 11, wobei das Kennungselement als Smartcard-Element (350) vorgesehen ist und die Leseeinrichtung als Smartcard-Leser (250) vorgesehen ist.

13. Sicherheitsgurt-Einheit (101, 102) zur Verwendung in einem Passagier-Sicherheitsgurt-Überprüfungssystem gemäß einem der Ansprüche 11 bis 15, welche eine Verschlusseinrichtung mit einem Buchsenteil (201, 202) und einem Steckerteil (301, 302) aufweist, wobei das Steckerteil (301, 302) ein Kennungselement (350, 360) mit gespeicherter Identifikationsinformation umfasst und wobei das Buchsenteil (201, 202) eine entsprechende Leseeinrichtung (250, 260) umfasst, wobei die Leseeinrichtung (250, 260) dafür ausgelegt ist, die Identifikationsinformation auszulesen, wenn das Steckerteil (301, 302) ordnungsgemäß in das Buchsenteil (201, 202) eingefügt ist, und Status-Meldungen an eine zentrale Verarbeitungseinrichtung (400) zu übermitteln;
**dadurch gekennzeichnet, dass**
das Kennungselement eine Kontaktkarte darstellt und dass
die Leseeinrichtung dafür ausgelegt ist, die in dem Kennungselement (350, 360) gespeicherte Identifikationsinformation bei Kontaktierung des Kennungselementes mit der Leseeinrichtung (250, 260) auszulesen, wobei ein Kontakt zwischen dem Kennungselement (350, 360) und der Leseeinrichtung (250, 260) nur hergestellt ist, wenn das Steckerteil (301, 302) ordnungsgemäß in das Buchsenteil (201, 202) eingefügt ist.

## Revendications

1. Procédé de vérification de ceintures de sécurité de passagers comprenant les étapes consistant à :
- prévoir au moins une unité ceinture de sécurité (101, 102) comportant un dispositif de fermeture pourvu d'une partie femelle (201, 202) et d'une partie mâle (301, 302), ladite partie mâle (301, 302) comprenant un dispositif étiquette (350, 360) stockant des informations d'identification, et ladite partie femelle (201, 202) comprenant un dispositif lecteur (250, 260) correspondant,
- lire les informations d'identification stockées dans le dispositif étiquette (350, 360) par ledit dispositif lecteur (250, 260), lesdites informations d'identification n'étant lues que lorsque la partie mâle (301, 302) est correctement insérée dans la partie femelle (201, 202),
- transmettre un message d'état du dispositif lecteur (250, 260) à un dispositif de traitement central (400),
- déterminer l'état de fixation de chaque unité ceinture de sécurité (101, 102) à partir des messages d'état reçus par ledit dispositif de traitement central (400), et
- transmettre l'état de fixation de chaque unité ceinture de sécurité (101, 102) à un dispositif de sortie (610, 620) pour vérification,
**caractérisé en ce que**
le dispositif étiquette est une carte à contact et les informations d'identification stockées dans le dispositif étiquette (350, 360) sont lues lors du contact avec le dispositif lecteur (250, 260), le contact entre le dispositif étiquette (350, 360) et le dispositif lecteur (250, 260) est uniquement établi lorsque la partie mâle (301, 302) est correctement insérée dans la partie femelle (201, 202).

2. Procédé selon la revendication 1, dans lequel les informations d'identification stockées dans le dispositif étiquette (350, 360) comprennent une première identification, qui représente le numéro de siège du siège auquel est fixée l'unité ceinture de sécurité (101, 102), et dans lequel ledit message d'état comprend ladite première identification.

3. Procédé selon la revendication 2, dans lequel, dans le dispositif lecteur (250, 260), est stockée une deuxième identification, qui représente le numéro de siège du siège auquel est fixée l'unité ceinture de sécurité (101, 102), le message d'état comprenant la première identification et la deuxième identification, et le dispositif de traitement central (400) comparant les première et deuxième identifications afin de déterminer l'état de fixation de l'unité ceinture de sécurité (101, 102).

4. Procédé selon l'une quelconque des revendications 1 à 3, dans lequel les messages d'état sont transmis périodiquement à un intervalle de temps prédéfini.

5. Procédé selon la revendication 4, dans lequel l'exécution du logiciel dans le dispositif de traitement central (400) est apte à détecter une modification de l'état de fixation de l'unité ceinture de sécurité (101, 102), et dans lequel le dispositif de traitement central (400) transmet l'état de fixation au dispositif de sortie (610, 620) uniquement après détection d'une modification.

6. Procédé selon l'une quelconque des revendications 1 à 3, dans lequel le dispositif lecteur (250, 260) est apte à détecter une modification de l'état de fixation de l'unité ceinture de sécurité (101, 102), et dans lequel un message d'état est transmis uniquement après détection d'une modification.

7. Procédé selon l'une quelconque des revendications 1 à 6, dans lequel une pluralité d'unités ceintures de sécurité (101, 102) est prévue, qui sont organisées en groupes (810, 820), chaque groupe comprenant une unité ceinture de sécurité (811, 812) maîtresse, et dans lequel :
- les messages d'état sont transmis par réseau sans fil,
- au dispositif lecteur de chaque dite unité ceinture de sécurité (812, 822) maîtresse sont transmis des messages d'état depuis les dispositifs lecteurs de chacune des autres dites unités ceintures de sécurité appartenant au même groupe (810, 820) que l'unité ceinture de sécurité maîtresse (812, 822) respective, et
- le dispositif lecteur de chaque unité ceinture de sécurité maîtresse regroupe son propre message d'état avec tous les messages d'état reçus d'autres dispositifs lecteurs et transmet un message d'état regroupé au dispositif lecteur d'une autre unité ceinture de sécurité maîtresse ou au dispositif de traitement central (400).

8. Procédé selon la revendication 7, dans lequel les unités ceintures de sécurité maîtresses sont organisées en groupes (830, 840), dans lequel dans chaque groupe (830, 840) les unités ceintures de sécurité maîtresses sont ordonnées en fonction de leur distance relativement au dispositif de traitement central (400), et dans lequel dans chaque groupe (830, 840) le dispositif lecteur de chaque unité ceinture de sécurité maîtresse transmet son message d'état regroupé au dispositif lecteur de l'unité ceinture de sécurité maîtresse, se trouvant le plus proche du dispositif de traitement central, en commençant par l'unité ceinture de sécurité maîtresse la plus éloignée du dispositif de traitement central (400) et en terminant par l'unité ceinture de sécurité maîtresse la plus rapprochée du dispositif de traitement central (400) et dont le dispositif lecteur transmet son message d'état regroupé directement au dispositif de traitement central (400).

9. Système de vérification de ceintures de sécurité de passagers comprenant :
- au moins une unité ceinture de sécurité (101, 102),
- un dispositif de traitement central (400), et
- un dispositif d'affichage central (620), dans lequel système
- chacune desdites unités ceintures de sécurité (101, 102) comporte un dispositif de fermeture pourvu d'une partie femelle (201, 202) et d'une partie mâle (301, 302),
- ladite partie mâle (301, 302) comprenant un dispositif étiquette (350, 360) comportant un moyen de stockage où sont stockées des informations d'identification, ledit dispositif étiquette (350, 360) en particulier servant de dispositif passif,
- ladite partie femelle (201, 202) comprend un dispositif lecteur (250, 260) apte à lire les informations d'identification stockées dans ledit dispositif étiquette (350, 360), lorsque la partie mâle (301, 302) est correctement insérée dans la partie femelle (201, 202),
- chacun desdits dispositifs lecteurs (250, 260) étant apte à transmettre des messages d'état au dispositif de traitement central (400),
- le dispositif de traitement central (400) étant apte à déterminer, à partir des messages d'état reçus, l'état de fixation de chacune desdites unités ceintures de sécurité (101, 102) et à transmettre ledit état de fixation audit dispositif d'affichage central (620) et/ou à un dispositif d'affichage de passagers (610) situé relativement au siège respectif, **caractérisé en ce que** le dispositif étiquette est une carte à contact, et le dispositif lecteur est apte à lire les informations d'identification stockées dans le dispositif étiquette (350, 360) lors du contact du dispositif étiquette avec le dispositif lecteur (250, 260), le contact entre le dispositif étiquette (350, 360) et le dispositif lecteur (250, 260) étant uniquement établi lorsque la partie mâle (301, 302) est correctement insérée dans la partie femelle (201, 202).

10. Système selon la revendication 9, dans lequel dans ledit dispositif étiquette (350, 360) est stockée une première identification, qui représente le numéro de siège du siège auquel est fixée l'unité ceinture de sécurité (101, 102), et le dispositif lecteur est apte à lire ladite première identification et à la transmettre au sein d'un message d'état au dispositif de traitement central (400).

11. Système selon la revendication 10, dans lequel :
- dans ledit dispositif lecteur (250, 260) est stockée une deuxième identification, qui représente le numéro de siège du siège auquel est fixée l'unité ceinture de sécurité (101),
- le dispositif lecteur (250, 260) est apte à transmettre un message d'état, qui comprend la première identification et la deuxième identification, et
- le dispositif de traitement central (400) est apte à comparer les première et deuxième identifications afin de déterminer l'état de fixation de l'unité ceinture de sécurité (101, 102).

12. Système selon l'une quelconque des revendications 9 à 11, dans lequel ledit dispositif étiquette est un dispositif à carte intelligente (350) et ledit dispositif lecteur est un lecteur de carte intelligente (250).

13. Unité ceinture de sécurité (101, 102) pour utilisation dans un système de vérification de ceintures de sécurité de passagers selon l'une quelconque des revendications 11 à 15, comportant un dispositif de fermeture pourvu d'une partie femelle (201, 202) et d'une partie mâle (301, 302), ladite partie mâle (301, 302) comprenant un dispositif étiquette (350, 360) stockant des informations d'identification, et ladite partie femelle (201, 202) comprenant un dispositif lecteur (250, 260) correspondant, ledit dispositif lecteur (250, 260) étant apte à lire lesdites informations d'identification, lorsque la partie mâle (301, 302) est correctement insérée dans la partie femelle (201, 202), et à transmettre les messages d'état à un dispositif de traitement central (400),
**caractérisée en ce que**
le dispositif étiquette est une carte à contact, et
le dispositif lecteur est apte à lire les informations d'identification stockées dans le dispositif étiquette (350, 360) lors du contact du dispositif étiquette avec le dispositif lecteur (250, 260) le contact entre le dispositif étiquette (350, 360) et le dispositif lecteur (250, 260) étant uniquement établi lorsque la partie mâle (301, 302) est correctement insérée dans la partie femelle (201, 202).
